# EUROPEAN PATENT APPLICATION

(11) **EP 4 793 082 A1**
(43) Date of publication of application: **19.08.2026**
(21) Application number: 26154991.9
(22) Date of filing: 29.01.2026
(51) Int. Cl.: B60L 1/02, B60L 58/27, H01M 10/615, H01M 10/625, B62D 65/00, G05D 1/249

(54) **CONTROL SYSTEM**

(30) Priority: 18.02.2025 JP 2025024283; 24.07.2025 JP 2025123962
(71) Applicant: Toyota Jidosha Kabushiki Kaisha, Toyota-shi, Aichi-ken 471-8571 (JP)
(72) Inventor: HORI, Takamichi, Toyota-shi, Aichi-ken, 471-8571 (JP); SUZUKI, Tomoaki, Toyota-shi, Aichi-ken, 471-8571 (JP); YOKOYAMA, Daiki, Toyota-shi, Aichi-ken, 471-8571 (JP)
(74) Representative: Winter, Brandl - Partnerschaft mbB

(57) **Abstract**

A control system includes: a communication device that acquires information indicating the step currently being performed in a vehicle in the manufacturing process of the vehicle; a server that determines the mode of ripple heating control based on the information acquired by the communication device; and a vehicle control unit that performs ripple heating based on the mode determined by the server.

## Description

### BACKGROUND OF THE INVENTION

### 1. Field of the Invention

The present disclosure relates to control systems.

### 2. Description of Related Art

Japanese Unexamined Patent Application Publication No. 2024-124313 (JP 2024-124313 A) discloses a vehicle capable of unmanned travel with no body shell installed.

### SUMMARY OF THE INVENTION

Although not described in JP 2024-124313 A, ripple heating control may sometimes be performed to raise the temperature of a vehicle's energy storage device by supplying ripple current to the energy storage device. Since ripple current is alternating current, a magnetic field is generated as the current value changes. Accordingly, when ripple heating control is performed in a vehicle without a body shell, there is a risk that a large amount of magnetic field may leak from the vehicle.

The present disclosure has been made in view of the foregoing issue, and it is an object of the present disclosure to provide a control system capable of suppressing magnetic field leakage from a vehicle.

A control system according to one aspect of the present disclosure is configured to perform heating control that raises the temperature of an energy storage device mounted on a vehicle. The control system includes: an information acquisition device configured to acquire either or both of first information and second information, the first information indicating the state of the vehicle in a manufacturing process of the vehicle, and the second information indicating the step currently being performed in the manufacturing process; a heating-mode determination device configured to determine the mode of the heating control based on either or both of the first information and the second information acquired by the information acquisition device, the mode including at least ripple heating in which a ripple current is applied to the energy storage device; and a heating execution device configured to perform the heating control based on the mode determined by the heating-mode determination device. The heating-mode determination device is configured to determine, based on either or both of the first information and the second information, whether a predetermined condition is satisfied, and, when the predetermined condition is satisfied, make an amount of heat generated by the ripple current smaller than when the predetermined condition is not satisfied. Making the amount of heat generated by the ripple current smaller includes reducing the amount of heat generated by the ripple current to zero.

With this configuration, the mode of the ripple heating can be determined based on either or both of the state of the vehicle and the step currently being performed. The amount of magnetic field generated by the ripple heating can thus be adjusted based on either or both of the state of the vehicle and the step currently being performed. Accordingly, magnetic field leakage from the vehicle can be easily suppressed.

The information acquisition device may be configured to acquire the first information. Information indicating that the vehicle is in a chassis-module state is defined as chassis information, and the amount of heat generated in the energy storage device by the ripple heating is defined as a ripple heat generation amount. The predetermined condition may be that the first information includes the chassis information. With this configuration, the amount of magnetic field generated by the ripple heating when the vehicle is in the chassis-module state can be made smaller than that generated by the ripple heating when the vehicle is not in the chassis-module state. Accordingly, when the vehicle is in the chassis-module state in which components such as the body are not yet assembled and magnetic field leakage is relatively large, the amount of magnetic field generated can be made relatively small. Accordingly, magnetic field leakage from the vehicle can further be suppressed.

The information acquisition device may be configured to acquire the second information. The amount of heat generated in the energy storage device by the ripple heating is defined as a ripple heat generation amount. The predetermined condition may be that the step currently being performed based on the second information is before a predetermined step. With this configuration, the amount of magnetic field generated in steps before the predetermined step can be easily reduced.

The information acquisition device may be configured to acquire the second information. The amount of heat generated in the energy storage device by the ripple heating is defined as a ripple heat generation amount. The predetermined condition may be that the step currently being performed based on the second information belongs to a predetermined step. With this configuration, the amount of magnetic field generated in the predetermined step can be easily reduced.

In this case, the predetermined step may be a step in which a worker gets into the vehicle and performs work. With this configuration, magnetic field leakage from the vehicle when a person is in the vehicle performing work can be easily reduced. As a result, the influence of the magnetic field on the worker can be reduced.

The heating control may include different-type heating control that generates less magnetic field than the ripple heating. The heating-mode determination device may be configured to perform the different-type heating control when the predetermined condition is satisfied. With this configuration, when the amount of heat generated by the ripple heating is small, the amount of heat generated in the energy storage device can be increased by the different-type heating control while suppressing magnetic field generation.

The different-type heating control may include control that raises the temperature of the energy storage device by heat from a heat medium flowing through a heat medium circuit. With this configuration, magnetic field generation can be easily suppressed while increasing the amount of heat generated in the energy storage device.

The heating execution device may include a motor generator provided in the vehicle, and an inverter electrically connected to the motor generator and the energy storage device. The different-type heating control may be control that causes the motor generator to generate heat by a circulating current flowing through the motor generator and the inverter and transfers the heat generated in the motor generator to the energy storage device through the heat medium. With this configuration, heat to be transferred to the energy storage device can be easily generated by a circulating current flowing through the motor generator and the inverter while suppressing magnetic field generation.

The present disclosure can suppress magnetic field leakage from a vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows the configuration of a control system according to a first embodiment;
FIG. 2 shows the configuration of an energy storage device and a drive unit according to the first embodiment;
FIG. 3 is a sequence diagram showing control performed by the control system according to the first embodiment;
FIG. 4 is a sequence diagram showing control performed by a control system according to a first modification of the first embodiment;
FIG. 5 is a sequence diagram showing control performed by a control system according to a second modification of the first embodiment;
FIG. 6 is a sequence diagram showing control performed by a control system according to a third modification of the first embodiment;
FIG. 7 shows the configuration of a control system according to a second embodiment;
FIG. 8 shows the configuration of an energy storage device and a drive unit according to the second embodiment;
FIG. 9 schematically shows the configuration of a thermal management circuit according to the second embodiment; and
FIG. 10 is a sequence diagram showing control performed by the control system according to the second embodiment.

### DETAILED DESCRIPTION OF EMBODIMENTS

Embodiments of the present disclosure will be described with reference to the drawings. The same or corresponding components are denoted by the same signs throughout the drawings.

### First Embodiment

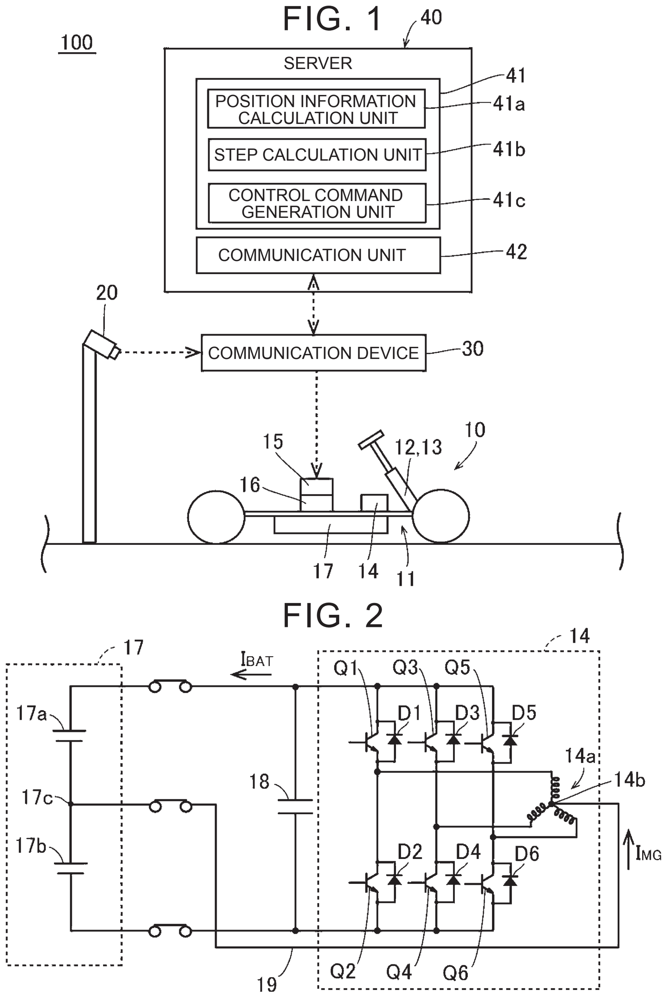

FIG. 1 shows the configuration of a control system 100 according to a first embodiment. The control system 100 includes a vehicle 10, a ranging device 20, a communication device 30, and a server 40. The communication device 30 and the server 40 are examples of the "information acquisition device" and the "heating-mode determination device" in the present disclosure, respectively.

The vehicle 10 includes a chassis 11, a steering unit 12, a braking unit 13, a drive unit 14, a communication unit 15, a vehicle control unit 16, and an energy storage device 17. The vehicle control unit 16 is an example of the "heating execution device" in the present disclosure.

The control system 100 is used in the manufacturing process of the vehicle 10. The manufacturing process of the vehicle 10 includes a driving step, a work step, and an assembly step. In the driving step, the vehicle 10 undergoes test driving on a driving path. The work step is performed after the driving step. In the work step, a worker gets into the vehicle 10 and assembles components at a workstation. The assembly step is performed after the work step on a production line. In the assembly step, components such as the body and floor panels are assembled. The components such as the body and the floor panels suppress the leakage of magnetic field generated from the energy storage device 17 during ripple heating described later.

In the driving step, the vehicle 10 travels in a chassis-module state in which the components such as the body are not yet installed (hereinafter referred to as "chassis state"). In this step, the vehicle 10 travels in accordance with control commands from the server 40. Through remote control by the server 40, the vehicle 10 can at least perform the three functions of "moving," "turning," and "stopping."

The steering unit 12 adjusts the direction of travel (steering angle) of the vehicle 10. The braking unit 13 adjusts the amount of deceleration of the vehicle 10. The vehicle control unit 16 controls the steering angle of the vehicle 10. The drive unit 14 includes a drive power source of the vehicle 10 and controls the acceleration of the vehicle 10. The communication unit 15 communicates with the communication device 30. The vehicle control unit 16 includes a control unit that controls the steering angle of the vehicle 10, a control unit that controls the acceleration of the vehicle 10, and a control unit that controls ripple heating described later. The vehicle control unit 16 controls the steering unit 12, the braking unit 13, the drive unit 14, and the like. The energy storage device 17 is a battery such as a lithium-ion battery, and stores electric power used for causing the vehicle 10 to travel.

The ranging device 20 measures the vehicle 10 as a target object. The ranging device 20 acquires three-dimensional point cloud data of the vehicle 10. The ranging device 20 may be, for example, a camera or a light detection and ranging (LiDAR) sensor. The three-dimensional point cloud data acquired by the ranging device 20 is transmitted to the communication device 30. Although one ranging device 20 is shown in FIG. 1, one or more ranging devices 20 may be installed at each of the driving path used for the test driving, the workstation used by a worker, and the production line.

The communication device 30 is capable of communicating with the ranging device 20, and also with the communication unit 15 of the vehicle 10 and the server 40. The communication device 30 transmits the three-dimensional point cloud data acquired by the ranging device 20 to the server 40.

The server 40 includes a processor 41 and a communication unit 42. The processor 41 includes a position information calculation unit 41a, a step calculation unit 41b, and a control command generation unit 41c. Each of the position information calculation unit 41a, the step calculation unit 41b, and the control command generation unit 41c may represent software configured as a corresponding one of the functional blocks that correspond to functional features of the processor 41. Alternatively, these functional features may be executed by different processors. The communication unit 42 is capable of communicating with the communication device 30, and receives the three-dimensional point cloud data from the communication device 30.

The position information calculation unit 41a calculates the position and orientation (direction) of the vehicle 10 based on the three-dimensional point cloud data. The step calculation unit 41b calculates (determines), based on the position of the vehicle 10 calculated by the position information calculation unit 41a, which step in the manufacturing process of the vehicle 10 is currently being performed (hereinafter referred to as "current step"). The control command generation unit 41c generates command values for the steering angle, acceleration, and the like of the vehicle 10 based on the position and orientation calculated by the position information calculation unit 41a. The control command generation unit 41c also generates commands related to ripple heating described below, based on the current step calculated by the step calculation unit 41b. Information on the position of the vehicle 10 is an example of the "second information" in the present disclosure.

The communication unit 42 transmits the commands generated by the control command generation unit 41c to the communication device 30. The communication device 30 transmits the commands received from the communication unit 42 to the communication unit 15 of the vehicle 10. The vehicle control unit 16 controls the steering unit 12, the braking unit 13, the drive unit 14, and other components of the vehicle 10 based on the commands received by the communication unit 15.

FIG. 2 shows the detailed configuration of the energy storage device 17 and the drive unit 14. The drive unit 14 includes a motor generator (MG) 14a, switching elements Q1 to Q6, and diodes D1 to D6. The energy storage device 17 includes batteries 17a, 17b. The switching elements Q1 to Q6 and the diodes D1 to D6 form an inverter.

The switching elements Q1, Q2 are connected in series. The diodes D1, D2 are connected in parallel with the switching elements Q1, Q2, respectively. The switching elements Q1, Q2 form a U-phase arm that outputs a U-phase voltage to the MG 14a.

The switching elements Q3, Q4 are connected in series. The diodes D3, D4 are connected in parallel with the switching elements Q3, Q4, respectively. The switching elements Q3, Q4 form a V-phase arm that outputs a V-phase voltage to the MG 14a.

The switching elements Q5, Q6 are connected in series. The diodes D5, D6 are connected in parallel with the switching elements Q5, Q6, respectively. The switching elements Q5, Q6 form a W-phase arm that outputs a W-phase voltage to the MG 14a.

The batteries 17a, 17b are connected in series. In the vehicle 10 (FIG. 1), a smoothing capacitor 18 is connected in parallel with a series circuit of the batteries 17a, 17b.

A midpoint 17c on the wire that connects the batteries 17a, 17b is connected to a neutral point 14b of the MG 14a by a wire 19.

The vehicle control unit 16 (FIG. 1) controls the drive unit 14 to perform ripple heating. Ripple heating is control that raises the temperature of the energy storage device 17 by applying ripple current (alternating current) to the energy storage device 17. Specifically, ripple heating is control that boosts and steps down the voltage between the energy storage device 17 and the smoothing capacitor 18 to generate ripple current in the energy storage device 17 and raise the temperature of the energy storage device 17 by Joule heat. The specific control of ripple heating is described below. The method of ripple heating control is not limited to the one described below.

Ripple heating control is control that generates ripple current (I_{BAT}) flowing through the energy storage device 17 by repeatedly boosting and stepping down the voltage of the smoothing capacitor 18. In FIG. 2, the current flowing through the MG 14a is denoted as I_{MG}, and the current flowing through the energy storage device 17 is denoted as I_{BAT}. The positive directions of I_{MG} and I_{BAT} are indicated by the arrows shown in FIG. 2.

First, the boosting operation will be described. For simplicity of description, the operation will be described focusing on the U-phase.

First, the switching element Q1 is turned off, and the switching element Q2 is turned on. In this state, current flows in the following order: battery 17b, wire 19, neutral point 14b, switching element Q2, and battery 17b. As a result, energy is stored in the coil of the MG 14a (hereinafter referred to as "MG coil"). At this time, since current flows through the MG coil, magnetic flux is generated.

Next, the switching element Q1 is turned on, and the switching element Q2 is turned off. In this state, current flows in the following order: neutral point 14b, switching element Q1, smoothing capacitor 18, battery 17b, wire 19, and neutral point 14b. As a result, the energy stored in the MG 14a is released, and the smoothing capacitor 18 is boosted. The current flowing at this time is maintained by the self-induction of the MG coil.

Thereafter, both of the switching elements Q1, Q2 are turned off. At this time, the potential (2Δ + α) of the smoothing capacitor 18 becomes higher than the sum of the potential (Δ) of the battery 17a and the potential (Δ - α) of the battery 17b. Therefore, the current (I_{BAT}) flows in the following order: smoothing capacitor 18, battery 17a, battery 17b, and smoothing capacitor 18.

Next, the step-down operation will be described. For simplicity of description, the operation will be described focusing on the U-phase.

First, the switching element Q1 is turned on, and the switching element Q2 is turned off. In this state, current flows in the following order: smoothing capacitor 18, switching element Q1, neutral point 14b, wire 19, battery 17b, and smoothing capacitor 18. As a result, energy is stored in the MG 14a, and the voltage across the smoothing capacitor 18 is stepped down. At this time, since current flows through the MG coil, magnetic flux is generated.

Next, the switching element Q1 is turned off, and the switching element Q2 is turned on. In this state, current flows in the following order: neutral point 14b, wire 19, battery 17b, switching element Q2, and neutral point 14b. As a result, the energy stored in the MG 14a is released. Since the smoothing capacitor 18 is disconnected from the circuit, self-induction occurs in the MG coil. Therefore, the current flowing at this time is maintained.

Next, both of the switching elements Q1, Q2 are turned off. At this time, the sum of the potential (Δ) of the battery 17a and the potential (Δ + α) of the battery 17b becomes higher than the potential (2Δ - α) of the smoothing capacitor 18. Therefore, the current (I_{BAT}) flows in the following order: battery 17b, battery 17a, smoothing capacitor 18, and battery 17b.

The value of the ripple current can be adjusted by changing the duty cycle during the boosting and step-down operations. Specifically, the value of the ripple current can be increased by increasing the on-time of the switching element Q2 during the boosting operation and the on-time of the switching element Q1 during the step-down operation.

### Control Sequence

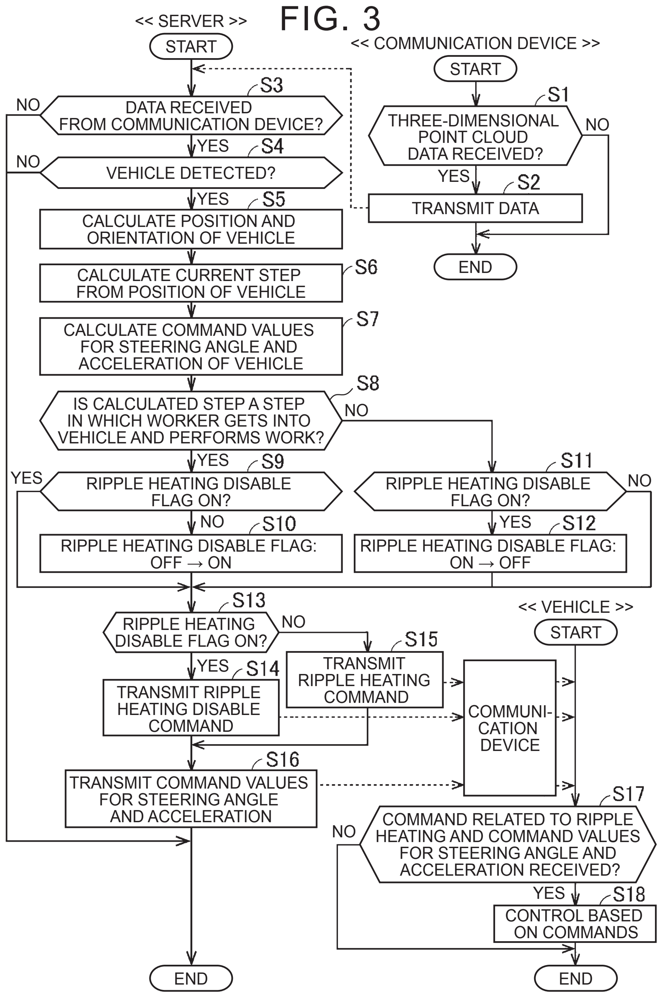

FIG. 3 is a sequence diagram showing control performed by the control system 100 during the manufacturing process of the vehicle 10. The processing of the server 40 shown in FIG. 3 is executed by the processor 41. The processing of the vehicle 10 may be executed by the vehicle control unit 16.

In step S1, the communication device 30 determines whether it has received three-dimensional point cloud data from the ranging device 20. When the three-dimensional point cloud data has been received (Yes in S1), the process proceeds to step S2. When the three-dimensional point cloud data has not been received (No in S1), the process ends. The processing of step S1 may be omitted.

In step S2, the communication device 30 transmits the received three-dimensional point cloud data to the server 40 (communication unit 42).

In step S3, the server 40 determines whether it has received three-dimensional point cloud data from the communication device 30. When the three-dimensional point cloud data has been received (Yes in S3), the process proceeds to step S4. When the three-dimensional point cloud data has not been received (No in S3), the process ends.

In step S4, the server 40 determines whether the vehicle 10 has been detected. For example, when the received three-dimensional point cloud data includes data of the vehicle 10, the server 40 may determine that the vehicle 10 has been detected. When the vehicle 10 has been detected (Yes in S4), the process proceeds to step S5. When the vehicle 10 has not been detected (No in S4), the process ends.

In step S5, the server 40 calculates the position and orientation of the vehicle 10 based on the received three-dimensional point cloud data.

In step S6, the server 40 calculates the current step of the manufacturing process of the vehicle 10 based on the position of the vehicle 10 calculated in step S5. For example, when it is determined that the vehicle 10 is located on the driving path used for test driving, the server 40 determines that the current step is the driving step.

In step S7, the server 40 calculates command values for the steering angle and acceleration of the vehicle 10 based on the position and orientation of the vehicle 10 calculated in step S5. Specifically, when the driving step is currently being performed, the server 40 calculates command values for the steering angle and acceleration such that the vehicle 10 follows a preset driving route. The information on the preset driving route may be stored in, for example, the memory (not shown) of the server 40.

In step S8, the server 40 determines whether the step calculated in step S6 is the work step in which a worker gets into the vehicle 10 and performs work. When the calculated step is the work step (Yes in S8), the process proceeds to step S9. When the calculated step is not the work step (No in S8), the process proceeds to step S11. The work step is an example of the "predetermined step" in the present disclosure.

In step S9, the server 40 determines whether a ripple heating disable flag is on. When the ripple heating disable flag is on (Yes in S9), the process proceeds to step S13. When the ripple heating disable flag is off (No in S9), the process proceeds to step S10. Disabling ripple heating corresponds to "reducing the ripple heat generation amount" in the present disclosure.

In step S10, the server 40 changes the ripple heating disable flag from off to on. The process then proceeds to step S13.

In step S11, the server 40 determines whether the ripple heating disable flag is on. When the ripple heating disable flag is on (Yes in S11), the process proceeds to step S12. When the ripple heating disable flag is off (No in S11), the process proceeds to step S13.

In step S12, the server 40 changes the ripple heating disable flag from on to off. The process then proceeds to step S13.

In step S13, the server 40 determines whether the ripple heating disable flag is on. When the ripple heating disable flag is on (Yes in S13), the process proceeds to step S14. When the ripple heating disable flag is off (No in S13), the process proceeds to step S15.

In step S14, the server 40 (processor 41) transmits a ripple heating disable command to the communication device 30 via the communication unit 42. The ripple heating disable command is a command signal instructing to disable ripple heating. The process then proceeds to step S16.

In step S15, the server 40 (processor 41) transmits a ripple heating command to the communication device 30 via the communication unit 42. The ripple heating command may be a command to enable ripple heating. In this case, the timing for performing ripple heating may be determined by the vehicle 10. Alternatively, the ripple heating command may be a signal instructing to perform ripple heating. In this case, the server 40 may determine the timing for performing ripple heating based on the position, orientation, and the like of the vehicle 10. That is, the server 40 may transmit the ripple heating command to the vehicle 10 when it determines, based on the position, orientation, and the like of the vehicle 10, that the timing is appropriate for performing ripple heating.

In step S16, the server 40 (processor 41) transmits the command values for the steering angle and acceleration calculated in step S7 to the communication device 30 via the communication unit 42. The processing of step S16 may be executed simultaneously with, or before, steps S13 to S15.

The communication device 30 transmits the command from step S14 or S15 and the command values from step S16 to the communication unit 15 of the vehicle 10.

In step S17, the vehicle 10 (vehicle control unit 16) determines whether it has received the command related to ripple heating and the command values for the steering angle and acceleration. When the commands have been received (Yes in S17), the process proceeds to step S18. When the commands have not been received (No in S17), the process ends.

In step S18, the vehicle control unit 16 controls the vehicle 10 based on the received commands. This completes the control sequence of the control system 100.

As described above, in the first embodiment, the server 40 determines the control mode of ripple heating based on the step (current step) currently being performed by the vehicle 10. The vehicle control unit 16 of the vehicle 10 performs ripple heating according to the determined mode of ripple heating. This makes it possible to easily adjust the mode of ripple heating according to the step currently being performed by the vehicle 10. As a result, it becomes possible to easily reduce the influence of magnetic fields generated by ripple heating on the surroundings (e.g., workers).

### Modifications of First Embodiment

The first embodiment illustrates an example in which a command to disable ripple heating is transmitted to the vehicle 10. For example, a command to reduce the intensity of ripple heating (hereinafter also referred to as "ripple heating intensity") may alternatively be transmitted to the vehicle 10. Reducing the ripple heating intensity is an example of "reducing the ripple heat generation amount" in the present disclosure.

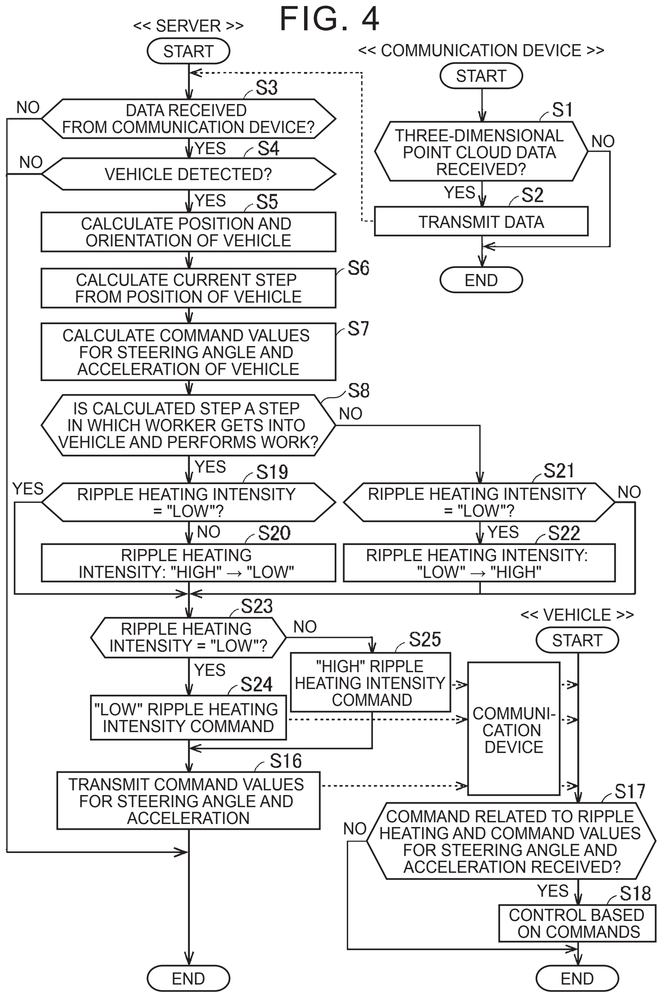

FIG. 4 shows a modification in which steps S9 to S15 of the sequence in FIG. 3 are replaced with steps S19 to S25, respectively. In step S19, the server 40 determines whether the ripple heating intensity is set to "Low." The ripple heating intensity is determined based on the amplitude and frequency of the ripple current. A "Low" ripple heating intensity means that the amount of heat generated in the energy storage device 17 by ripple heating is small. For example, the ripple heating intensity may be reduced by lowering the amplitude of the ripple current. The ripple heating intensity may alternatively be reduced by changing the frequency of the ripple current. For example, the server 40 may store at least two sets of information: a ripple current condition corresponding to a "Low" ripple heating intensity and a ripple current condition corresponding to a "High" ripple heating intensity. When the ripple heating intensity is set to "Low" (Yes in S19), the process proceeds to step S23. When the ripple heating intensity is set to "high" (No in S19), the process proceeds to step S20.

In step S20, the server 40 changes the setting of the ripple heating intensity from "High" to "Low." The process then proceeds to step S23.

In step S21, the server 40 determines whether the ripple heating intensity is set to "Low." When the ripple heating intensity is set to "Low" (Yes in S21), the process proceeds to step S22. When the ripple heating intensity is set to "High" (No in S21), the process proceeds to step S23.

In step S22, the server 40 changes the setting of the ripple heating intensity from "Low" to "High." The process then proceeds to step S23.

In step S23, the server 40 determines whether the ripple heating intensity is set to "Low." When the ripple heating intensity is set to "Low" (Yes in S23), the process proceeds to step S24. When the ripple heating intensity is set to "High" (No in S23), the process proceeds to step S25.

In step S24, the server 40 transmits a command value corresponding to the "Low" ripple heating intensity to the communication device 30 via the communication unit 42.

In step S25, the server 40 transmits a command value corresponding to the "High" ripple heating intensity to the communication device 30 via the communication unit 42. The rest of the process is the same as in the first embodiment.

The first embodiment illustrates an example in which the ripple heating disable command is transmitted to the vehicle 10 when the current step belongs to the work step. However, the present disclosure is not limited to this example.

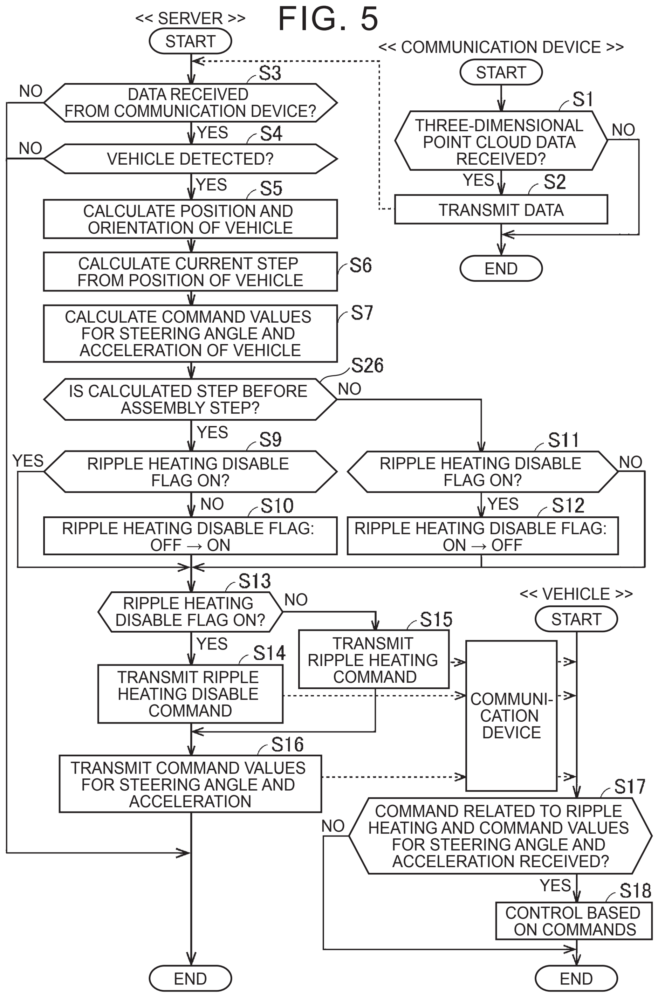

FIG. 5 shows a modification of the sequence diagram of FIG. 3. In FIG. 5, step S8 in FIG. 3 is replaced with step S26. As shown in FIG. 5, in step S26, the server 40 determines whether the current step calculated in step S6 is before the assembly step. When the current step is before the assembly step (Yes in S26), the process proceeds to step S9. When the current step is the assembly step or any subsequent step (No in S26), the process proceeds to step S11. The rest of the process is the same as in the first embodiment. The assembly step is an example of the "predetermined step" in the present disclosure.

The first embodiment illustrates an example in which the ripple heating disable command is transmitted to the vehicle 10 based on the current step. However, the present disclosure is not limited to this example.

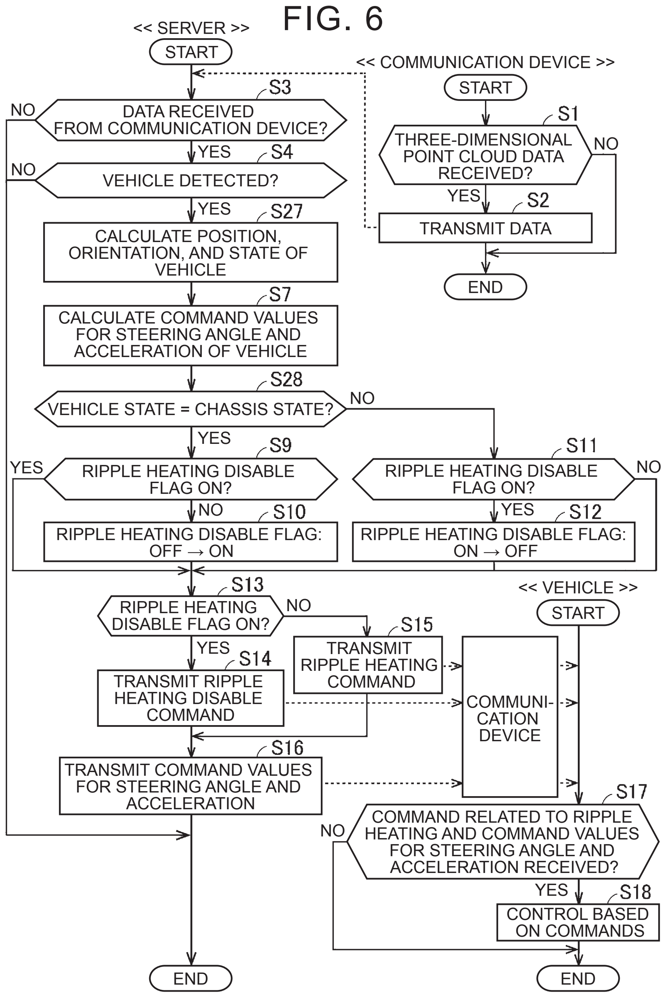

FIG. 6 shows a modification of the sequence diagram of FIG. 3. In FIG. 6, steps S5, S8 in FIG. 3 are replaced with steps S27, S28, respectively, and step S6 in FIG. 3 is removed. As shown in FIG. 6, in step S27, the server 40 calculates the position, orientation, and state of the vehicle 10 based on the three-dimensional point cloud data. The process then proceeds to step S7. Information on the state of the vehicle 10 is an example of the "first information" in the present disclosure.

In step S28 following step S7, the server 40 determines whether the state of the vehicle 10 calculated in step S27 is the chassis state. When the vehicle 10 is in the chassis state (Yes in S28), the process proceeds to step S9. When the vehicle 10 is not in the chassis state (No in S28), the process proceeds to step S11. The rest of the process is the same as in the first embodiment.

In the modifications of FIGS. 5 and 6, the intensity of ripple heating may also be controlled in the same manner as that in FIG. 4.

### Second Embodiment

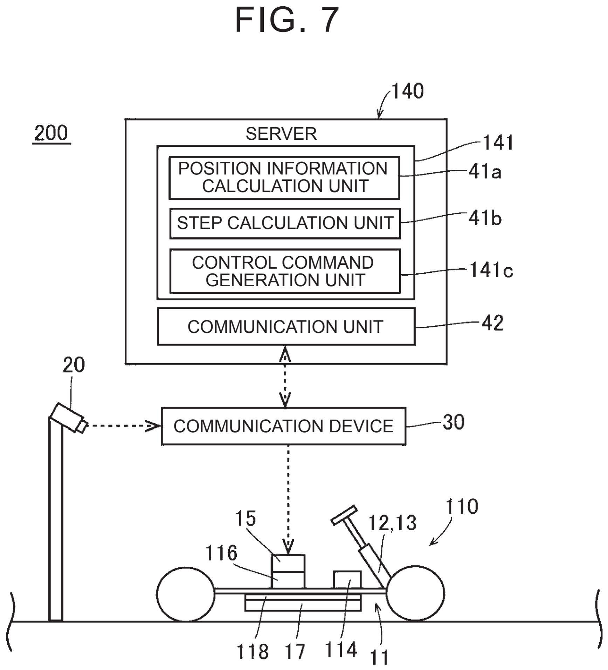

Next, a second embodiment of the present disclosure will be described with reference to FIGS. 7 to 10. In the second embodiment, in addition to ripple heating, the temperature of the energy storage device 17 is raised using a heat medium. The same components as those in the first embodiment are denoted by the same signs as those in the first embodiment, and repeated description may be omitted.

FIG. 7 shows the configuration of a control system 200 according to the second embodiment. The control system 200 includes a vehicle 110, a ranging device 20, a communication device 30, and a server 140. The server 140 is an example of the "heating-mode determination device" of the present disclosure.

The vehicle 110 includes a chassis 11, a steering unit 12, a braking unit 13, a drive unit 114, a communication unit 15, a vehicle control unit 116, an energy storage device 17, and a thermal management circuit 118. The vehicle control unit 116 and the thermal management circuit 118 are examples of the "heating execution device" and the "heat medium circuit" in the present disclosure, respectively.

The server 140 includes a processor 141 and a communication unit 42. The processor 141 includes a position information calculation unit 41a, a step calculation unit 41b, and a control command generation unit 141c. Each of the position information calculation unit 41a, the step calculation unit 41b, and the control command generation unit 141c may represent software configured as a corresponding one of the functional blocks that correspond to functional features of the processor 141. Alternatively, these functional features may be executed by different processors.

The processor 141 may be, for example, a central processing unit (CPU) or a micro-processing unit (MPU). In the present specification, the term "processor" is not limited to a processor in the narrow sense that executes processing based on a stored program, but may also include hardwired circuits such as application-specific integrated circuits (ASICs) and field-programmable gate arrays (FPGAs). Therefore, the term "processor" may be interpreted as a "processing circuitry" in which processing is defined in advance by computer-readable code and/or hardwired circuits.

The control command generation unit 141c generates commands for ripple heating control and zero-phase circulation heating control described later, based on the current step calculated by the step calculation unit 41b.

The communication unit 42 transmits the commands generated by the control command generation unit 141c to the communication device 30. The communication device 30 transmits the commands received from the communication unit 42 to the communication unit 15 of the vehicle 110. The vehicle control unit 116 controls the steering unit 12, the braking unit 13, the drive unit 114, the thermal management circuit 118, and other components of the vehicle 110 based on the commands received by the communication unit 15.

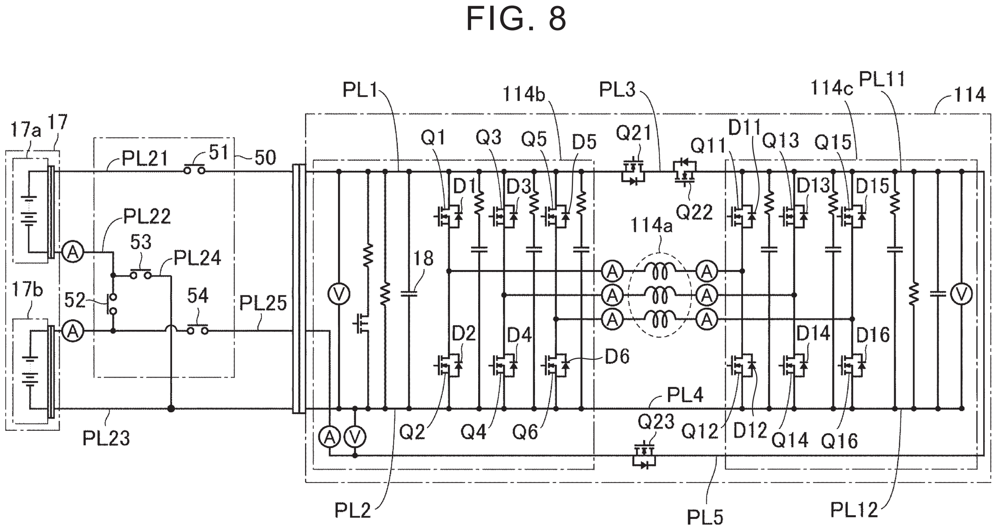

FIG. 8 shows the detailed configuration of the energy storage device 17 and the drive unit 114. The drive unit 114 includes a motor generator (MG) 114a, an inverter 114b including switching elements Q1 to Q6 and diodes D1 to D6, and an inverter 114c including switching elements Q11 to Q16 and diodes D11 to D16.

The U-phase coil of the MG 114a connects the U-phase of the inverter 114b and the U-phase of the inverter 114c. The V-phase coil of the MG 114a connects the V-phase of the inverter 114b and the V-phase of the inverter 114c. The W-phase coil of the MG 114a connects the W-phase of the inverter 114b and the W-phase of the inverter 114c. Each of these phase coils electrically connects the wires that connect the upper and lower arms of the corresponding phase.

The drive unit 114 further includes switching elements Q21, Q22. The switching elements Q21, Q22 are arranged on a wire PL3 that connects a positive-side wire PL1 of the inverter 114b and a positive-side wire PL11 of the inverter 114c. The switching elements Q21, Q22 are connected in series. A negative-side wire PL2 of the inverter 114b and a negative-side wire PL12 of the inverter 114c are connected by a wire PL4. No switching element is provided on the wire PL4.

The drive unit 114 further includes a wire PL5 connected to the positive-side wire PL11. A switching element Q23 is disposed on the wire PL5.

The vehicle 110 (FIG. 7) further includes a switching device 50 that connects the drive unit 114 and the energy storage device 17. The switching device 50 includes changeover switches 51 to 54.

The changeover switch 51 is disposed on a wire PL21 that electrically connects the positive-side wire PL1 and the battery 17a. The changeover switch 52 is disposed on a wire PL22 that connects the batteries 17a, 17b. The changeover switch 53 is disposed on a wire PL24 that connects a wire PL23 and the wire PL22. The wire PL23 electrically connects the battery 17b and the negative-side wire PL2. The changeover switch 54 is disposed on a wire PL25 that electrically connects the wire PL5 and a portion of the wire PL22 between the changeover switch 52 and the battery 17b.

### Ripple Heating Control

When the vehicle control unit 116 performs ripple heating control, it controls the drive unit 114 and the switching device 50 as follows. Specifically, the switching elements Q11, Q13, and Q15 of the inverter 114c are turned on, and the switching elements Q12, Q14, and Q16 of the inverter 114c are turned off. Furthermore, the changeover switches 51, 52, and 54 are turned on, and the changeover switch 53 is turned off. The switching elements Q21, Q22 are turned off. The switching element Q23 is turned on. In this state, the inverter 114b (Q1 to Q6) is controlled in the same manner as in the ripple heating control of the first embodiment. Ripple heating control in the second embodiment is thus achieved.

### Zero-Phase Circulation Heating Control

When the vehicle control unit 116 performs zero-phase circulation heating control, it controls the drive unit 114 and the switching device 50 as follows. Although the control using the U-phase circuit is described as an example, the same control is performed for the other phases (with phase shifts applied).

First, the switching elements Q1, Q12 are turned on, and the switching elements Q2, Q11 are turned off. The switching elements Q21, Q22 are turned on. The switching element Q23 is turned off. The changeover switches 51, 53 are turned on, while the changeover switches 52, 54 are turned off. Alternatively, the changeover switches 51, 52 may be turned on, and the changeover switches 53, 54 may be turned off. This state will be hereinafter referred to as "first state." In this state, a current (direct current) from the battery 17a circulates through the changeover switch 51, the switching element Q1, the U-phase coil of the MG 114a, the switching element Q12, and the changeover switch 53. As a result, energy is stored in the U-phase coil.

Next, the switching elements Q1, Q11 are turned on, and the switching elements Q2, Q12 are turned off. The switching elements Q21, Q22 are turned on. The switching element Q23 is turned off. The changeover switches 51 to 54 are turned off. This state will be hereinafter referred to as "second state." In this state, the energy stored in the U-phase coil is released. As a result, a current (direct current) circulates through the switching element Q1, the U-phase coil, the switching element Q11, the switching element Q22, and the switching element Q21. This causes the U-phase coil to generate heat.

After the circuit has been switched to the second state, the circuit is then switched to a third state described below. In the third state, the switching elements Q1, Q11 are turned off, and the switching elements Q2, Q12 are turned on. The switching elements Q21, Q22 remain on, and the switching element Q23 may remain off. The changeover switches 51 to 54 are turned off. In this state, a current (direct current) from the U-phase coil circulates through the switching element Q2, the U-phase coil, and the switching element Q12. This causes the U-phase coil to generate heat.

As described above, the circuit operation periodically switches in the order of the first state, the second state, the first state, and the third state. As a result, the coil (MG 114a) generates heat using the energy stored in the coil. Since zero-phase circulation heating control uses direct current, the amount of magnetic field generated is smaller than in ripple heating control that uses alternating current.

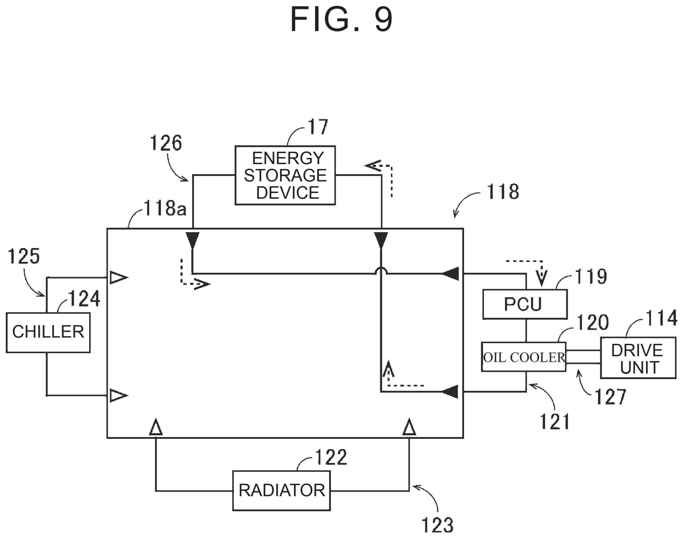

FIG. 9 schematically shows the thermal management circuit 118. The thermal management circuit 118 includes a changeover valve 118a. The changeover valve 118a is a multi-way valve capable of switching the circulation path of a heat medium within the thermal management circuit 118. The state of the changeover valve 118a is controlled by the vehicle control unit 116 based on commands from the control command generation unit 141c. Although FIG. 9 shows an example with a single changeover valve, two or more changeover valves may be provided.

The vehicle 110 (thermal management circuit 118) includes: a unit circuit 121 in which a power control unit (PCU) 119 and an oil cooler 120 are disposed; a radiator circuit 123 in which a radiator 122 is disposed; a chiller circuit 125 in which a chiller 124 is disposed; a battery circuit 126 in which the energy storage device 17 is disposed; and a circuit 127 in which the oil cooler 120 and the drive unit 114 are disposed. The changeover valve 118a is connected to each of the unit circuit 121, the radiator circuit 123, the chiller circuit 125, and the battery circuit 126.

The heat medium heated by the drive unit 114 (MG 114a) circulates through the circuit 127. At this time, the heat medium flowing through the circuit 127 exchanges heat, via the oil cooler 120, with the heat medium flowing through the unit circuit 121. As a result, the heat medium flowing through the unit circuit 121 is heated.

When the vehicle control unit 116 performs zero-phase circulation heating control, it controls the changeover valve 118a to connect the unit circuit 121 and the battery circuit 126. Specifically, the changeover valve 118a is controlled such that the heat medium circulates through a circuit extending from the unit circuit 121 through the changeover valve 118a to the battery circuit 126. Through this circulation, heat from the heat medium heated by the drive unit 114 is transferred to the energy storage device 17. As a result, the temperature of the energy storage device 17 is raised. In FIG. 9, the flow path of the heat medium is indicated by dashed arrows. The heat medium flow path shown in FIG. 9 is merely an example. The heat medium flow path is not limited to that shown in FIG. 9 as long as the heat from the drive unit 114 is transferred to the energy storage device 17.

### Control Sequence

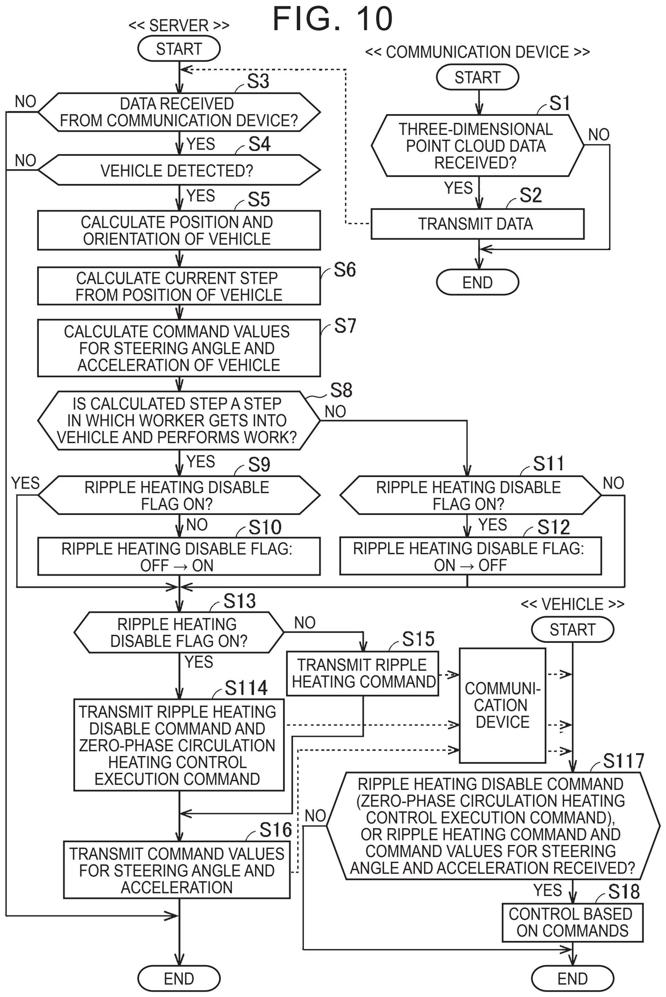

FIG. 10 is a sequence diagram showing control performed by the control system 200 in the manufacturing process of the vehicle 110 according to the second embodiment. The processing of the server 140 in FIG. 10 is executed by the processor 141. The processing of the vehicle 110 may be executed by the vehicle control unit 116. The same steps as those in the control flow of FIG. 3 are denoted by the same signs as those in FIG. 3, and repeated description will be omitted.

In the control flow of FIG. 10, steps S14, S17 in FIG. 3 are replaced with steps S114, S117, respectively.

In step S114, the server 140 (processor 141) transmits a ripple heating disable command and a command to perform zero-phase circulation heating control (hereinafter referred to as "zero-phase circulation heating control execution command") to the communication device 30 via the communication unit 42. The process then proceeds to step S16.

In step S117, the vehicle 110 (vehicle control unit 116) determines whether it has received (i) the ripple heating disable command and the zero-phase circulation heating control execution command, or (ii) the ripple heating command and the command values for the steering angle and acceleration. When the commands have been received (Yes in S117), the process proceeds to step S18. When the commands have not been received (No in S117), the process ends.

Since the rest of the process is the same as in the control flow of FIG. 3 of the first embodiment, repeated description will be omitted.

As described above, in the second embodiment, when the current step is a step in which a worker gets into the vehicle 110 and performs work, the server 140 performs zero-phase circulation heating control that generates less magnetic field than ripple heating. This makes it possible to raise the temperature of the energy storage device 17 while reducing the influence of magnetic fields on workers. In addition, the temperature of the energy storage device 17 can be raised in all steps.

### Modifications of Second Embodiment

The second embodiment illustrates an example in which control is performed to raise the temperature of the energy storage device 17 using the heat of a heat medium. However, the present disclosure is not limited to this example. For example, heater heating that raises the temperature of the energy storage device 17 using an electric heater may be performed. The heater heating is an example of the "different-type heating control" in the present disclosure.

The second embodiment illustrates an example in which control is performed to raise the temperature of the energy storage device 17 using heat generated by the MG 114a. However, the present disclosure is not limited to this example. For example, unit medium heating in which heat generated in the PCU 119 is transferred to the energy storage device 17 via a heat medium of the unit circuit 121 may be performed. The unit medium heating is an example of the "different-type heating control" in the present disclosure.

The second embodiment illustrates an example in which the control flow of the first embodiment and the zero-phase circulation heating control are combined. However, the present disclosure is not limited to this example. For example, the control flows of the modifications shown in FIGS. 5 and 6 may be combined with the zero-phase circulation heating control. Furthermore, the control flow of the modification shown in FIG. 4 may be combined with the heater heating or the unit medium heating. In this case, when the ripple heating intensity is set to "Low", the heater heating or the unit medium heating may be performed, and when the ripple heating intensity is set to "High", the heater heating and the unit medium heating may not be performed.

The first embodiment illustrates an example in which the position, orientation, and the like of the vehicle 10 are calculated based on three-dimensional point cloud data. However, the present disclosure is not limited to this example. For example, the position, orientation, and the like of the vehicle 10 may be calculated based on an image captured by a camera or the like. The same configuration may be applied to the second embodiment.

The configuration of the control system 100 is not limited to the example shown in FIG. 1. For example, the vehicle 10 may calculate control command values for the steering angle, acceleration, ripple heating, and the like, based on the position, orientation, and the like of the vehicle 10 calculated by the server 40. Alternatively, the vehicle 10 may calculate the position, orientation, and the like of the vehicle 10 and control command values for the steering angle, acceleration, ripple heating, and the like, based on three-dimensional point cloud data. In these examples and the first embodiment, control command values may be calculated based on data from a camera, a radar, or the like mounted on the vehicle 10 in addition to three-dimensional point cloud data acquired by the ranging device 20. The same configuration may be applied to the second embodiment.

The vehicle 10 may calculate control command values based on data from a camera, a radar, or the like mounted on the vehicle 10, without using three-dimensional point cloud data acquired by the ranging device 20. That is, the vehicle 10 may perform fully autonomous driving without using external information. Even in this case, the vehicle 10 may acquire external information that does not directly affect travel control (such as arrival times and traffic congestion information). The same configuration may be applied to the second embodiment.

The first embodiment illustrates an example in which the server 40 transmits and receives information via the communication device 30. However, the present disclosure is not limited to this example. The server 40 may directly acquire three-dimensional point cloud data from the ranging device 20. The server 40 may directly transmit control command values to the vehicle 10. The same configuration may be applied to the second embodiment.

The first embodiment illustrates an example in which the ripple heating control in the work step and the ripple heating control in steps other than the work step are made different from each other. However, the present disclosure is not limited to this example. For example, the ripple heating control in the driving step, the ripple heating control in the work step, and the ripple heating control in the assembly step and any subsequent step may be made different from each other. Specifically, when the current step is the driving step, the ripple heating intensity may be set to a first intensity smaller than the ripple heating intensity corresponding to the assembly step and any subsequent step. When the current step is the work step, the ripple heating intensity may be set to a second intensity smaller than the first intensity (or ripple heating may be disabled). The same configuration may be applied to the second embodiment.

The first embodiment illustrates an example in which the current step is calculated based on position information of the vehicle 10. However, the present disclosure is not limited to this example. The current step may be calculated based on information other than the position information of the vehicle 10. For example, the current step may be calculated based on detected values from various sensors mounted on the vehicle 10 (for example, a temperature sensor, a weight sensor, and a sound sensor). The same configuration may be applied to the second embodiment.

The configurations (controls) of the above embodiments and modifications may be combined with each other. For example, ripple heating control may be performed based on information on the calculated current step and information on the calculated state of the vehicle.

The embodiments disclosed herein should be considered to be illustrative in all respects and not restrictive. The scope of the present disclosure is set forth in the claims rather than in the above description of the embodiment, and is intended to include all modifications within the meaning and scope equivalent to the claims.

## Claims

1. A control system configured to perform heating control that raises a temperature of an energy storage device mounted on a vehicle, the control system comprising:
an information acquisition device configured to acquire either or both of first information and second information, the first information indicating a state of the vehicle in a manufacturing process of the vehicle, and the second information indicating a step currently being performed in the manufacturing process;
a heating-mode determination device configured to determine a mode of the heating control based on either or both of the first information and the second information acquired by the information acquisition device, the mode including at least ripple heating in which a ripple current is applied to the energy storage device; and
a heating execution device configured to perform the heating control based on the mode determined by the heating-mode determination device,
wherein the heating-mode determination device is configured to determine, based on either or both of the first information and the second information, whether a predetermined condition is satisfied, and, when the predetermined condition is satisfied, make an amount of heat generated by the ripple current smaller than when the predetermined condition is not satisfied.

2. The control system according to claim 1, wherein:
the information acquisition device is configured to acquire the first information;
information indicating that the vehicle is in a chassis-module state is defined as chassis information;
an amount of heat generated in the energy storage device by the ripple heating is defined as a ripple heat generation amount; and
the predetermined condition is that the first information includes the chassis information.

3. The control system according to claim 1, wherein:
the information acquisition device is configured to acquire the second information;
an amount of heat generated in the energy storage device by the ripple heating is defined as a ripple heat generation amount; and
the predetermined condition is that the step currently being performed based on the second information is before a predetermined step.

4. The control system according to claim 1, wherein:
the information acquisition device is configured to acquire the second information;
an amount of heat generated in the energy storage device by the ripple heating is defined as a ripple heat generation amount; and
the predetermined condition is that the step currently being performed based on the second information belongs to a predetermined step.

5. The control system according to claim 4, wherein the predetermined step is a step in which a worker gets into the vehicle and performs work.

6. The control system according to any one of claims 1 to 5, wherein:
the heating control includes different-type heating control that generates less magnetic field than the ripple heating; and
the heating-mode determination device is configured to perform the different-type heating control when the predetermined condition is satisfied.

7. The control system according to claim 6, wherein the different-type heating control includes control that raises the temperature of the energy storage device by heat from a heat medium flowing through a heat medium circuit.

8. The control system according to claim 7, wherein:
the heating execution device includes
a motor generator provided in the vehicle, and
an inverter electrically connected to the motor generator and the energy storage device; and
the different-type heating control is control that causes the motor generator to generate heat by a circulating current flowing through the motor generator and the inverter and transfers the heat generated in the motor generator to the energy storage device through the heat medium.
